# EUROPEAN PATENT APPLICATION

(11) **EP 1 420 337 A1**
(43) Date of publication of application: **19.05.2004**
(21) Application number: 02354177.4
(22) Date of filing: 15.11.2002
(51) Int. Cl.: G06F 9/44

(54) **System and method to provide a flexible user interface**

(71) Applicant: Hewlett-Packard Company, A Delaware Corporation, Palo Alto, CA 94304 (US)
(72) Inventor: Cioccarelli, Dominic, Mosman NSW 2088 (AU)
(74) Representative: Lloyd, Richard Graham

(57) **Abstract**

The present invention relates to a data processing system and method and, more particularly, to a data processing system and method which use a text-based description of a user interface element to produce, via an interpreter having a windowing system extension, a graphical representation of that user interface element, which can be invoked via, for example, mouse or keyboard events. The text-based description of the user interface element can be readily viewed and edited by a user in contrast to Java applets, which are downloaded and executed as binary class files. Preferred embodiments also provide a remote method invocation mechanism via which method of objects hosted by another machine can be invoked, which supplements the richness of the user interface and alleviates the client of some processing burden.

## Description

### Field of the Invention

The present invention relates to a data processing system and method and, more particularly, to such a system and method that provide a flexible user interface.

### Background of the Invention

With the ubiquitous nature of the Internet, the vast majority of businesses today have associated websites. Each of those websites can be viewed using a web-browser. Typically, when interacting with a website, a user browses sequentially through a series of hyperlinks which cause respective documents or digital content to be displayed within the browser or within a corresponding digital content or media resource viewer. The targets of the hyperlinks may be any resource that is stored on a server, that is, the targets of the hyperlinks include files, text, audio visual information and other web pages. Each web page is created and defined using a document mark up language, such as, for example, HTML, as is well known within that art. Mark up languages are well suited to presenting and rendering a document in a scalable and flexible manner according to the host environment, that is, the browser, used to view the web page. Various tags inform the web browser about, for example, text attributes and, based on these attributes, the browser will determine how the text should be displayed.

It will be appreciated that the primary purpose of HTML is to provide a universally recognised, platform independent, means of specifying the format and subsequent presentation of a document.

It will be appreciated that user interaction with the document, without more, is limited to selecting or browsing through a sequence of hyperlinks and viewing the rendered web pages accordingly. This degree of user interaction is very limiting and unsatisfactory from both a user's perspective and from the perspective of designers of web applications.

HTML forms were developed in an attempt to augment the degree of user interaction with a web page. An HTML form presents the user with a number of text fields to be completed using the mouse and the keyboard. Once the form has been completed, the form is usually submitted, that is, sent to the server, using an appropriate submit action such as depressing an "*OK*" button.

It will be appreciated by those skilled in the art that the richness of such a user interface is lacking when compared to a user interface such as that presented by the Windows operating system. The Windows operating system provides, for example, scalable and moveable windows that contain icons, menu bars, tool bars, radio buttons, pull down menus, scrollable menus etc.

In an attempt to emulate the Windows user interface to provide web applications with a significantly improved user interface, web application designers have used applets or ActiveX components. These applets or ActiveX components can be called from within an HTML document when rendered by a browser. However, Java applets, although providing one means of increasing the richness of a user interface, have been largely dismissed by developers of web applications as a means of providing a user interface. The disadvantages of using Java applets is that, firstly, they are slow to load and the Java virtual machine requires additional time to initialise on some browsers and, secondly, Java applets are distributed as binary class files, which makes them difficult to read and, hence, it is difficult to understand their internal workings.

Therefore, while HTML represents a satisfactory vehicle for document presentation, HTML does not currently represent a satisfactory means of presenting a user interface and responding to user input actions.

Still further, an attraction of HTML is that the source can be viewed readily within the browser and altered to suit a web application designer's needs. This possibility enables a high degree of information transfer between web designers who can benefit from each others experience by examining how each others web pages are constructed.

Extensions to HTML such as, for example, DHTML, as will be appreciated by those skilled in the art, assist to a certain extent in improving the flexibility of HTML. However, DHTML does not address the fundamental problem that a mark-up language was not designed or conceived with user interface presentation and manipulation in mind.

It is an object of the present invention at least to mitigate some of the problems of the prior art.

### Summary of Invention

Accordingly, a first aspect of the present invention provides a data processing system comprising a display device; a graphical user interface system comprising a graphical user interface element having properties responsive to respective events to change the state of the graphical user interface element and for presenting the graphical user interface element, according to the current state, on the display device; an event handler for directing events to the graphical user interface element; an interpretative host environment for rendering a document comprising text-based program code having at least a first text-based user interface instruction associated with the graphical user interface element; the host environment comprising an interpreter for executing the user interface instruction by invoking a corresponding first property of the properties of the graphical user interface element, in response to a first event directed to the graphical user interface element, to change the state of the graphical user interface element from the current state to first state.

Advantageously, since the documents are written in a text-based interpreted language and distributed as source code, it is easy for developers to understand how a document from a fellow developer works, which incites information transfer. Preferably, the transport mechanism remains as HTTP, which means that existing infrastructures (such as browsers, proxies, firewalls, routers, etc) do not need to be modified for the new language.

Preferred embodiments provide a data processing system in which the event handler comprises means to direct a second event to the graphical user interface element to produce a change in state of the graphical user interface element from the current state to a second state by invoking a corresponding second property of the properties.

Preferably, the graphical user interface system is a Java based windowing system, such as, for example, the Swing windowing system.

Preferred embodiments provide a data processing system further comprising a remote method invocation system to invoke a method of a remote object stored on a remote server; the remote method invocation system comprising an object creator to create a proxy object for the remote object, which can be invoked in response to the interpreter executing a second, text-based, instruction of the text-based program code.

It will be appreciated by those skilled in the art that it is desirable for a web application to be capable of responding to events generated by a user interface. These events may trigger method invocations on local objects. In a preferred embodiment, events may also trigger method invocations on remote (server hosted) objects via a suitable proxy or stub.

In a preferred embodiment, data is exchanged between the client machine and the server or, more particularly, between client side proxy objects and their corresponding server side implementations, by encoding the method call parameters or invocation in an XML file and transmitting the XML file via HTTP. The result of the method invocation is also returned via an XML file.

When a client wishes to invoke a method on a remote object, it invokes a method on a local ECMAscript proxy representing the remote object. This proxy object is responsible for marshalling the request parameters, transmitting them to the remote object implementation, receiving the result and transforming it into an appropriate ECMAscript object.

Another aspect of embodiments of the present invention provides a method of providing a user interface; the method comprising the steps of providing an interpreter, for interpreting a first, text-based, user interface element instruction, and a windowing system comprising at least one graphical user interface element bearing a method corresponding to the first, text-based, user interface element instruction, providing an interface between the interpreter and the windowing system, rendering at least a portion of the user interface element including invoking, via the interface, the method corresponding to the first, text-based, user interface element instruction to produce on a display a rendered user interface element in response to interpretation, by the interpreter, of the first, text-based, user interface element instruction.

Preferably, there is provided a method further comprising the step of providing an event handler for processing events associated with the rendered user interface element to invoke at least a second method of the at least one graphical user interface element corresponding to the first text-based user interface element instruction.

Preferred embodiments provide a method in which the interpreter is a script interpreter. Preferably, the script interpreter is an ECMA script interpreter.

Preferably, embodiments provide a method further comprising the step of providing the interpreter with a remote method invocation mechanism via which the rendered first text-based user interface element can invoke method of an object accessible from an object server.

A further aspect of embodiments of the present invention provides a computer program element for implementing a system and method as described and/or claimed in this specification. Preferred embodiments provide a computer program product comprising a computer readable storage storing such a computer program element. The term computer program encompasses a complete program or at least a part of a computer program.

### Brief Description of the Drawings

Embodiments of the present invention will now be described, by way of example, with reference to the accompanying drawings in which:
figure 1 illustrates an embodiment of a data processing system according to the present invention; and
figure 2 illustrates an example of a rendered UIDL document according to an embodiment.

### Detailed Description the Embodiments

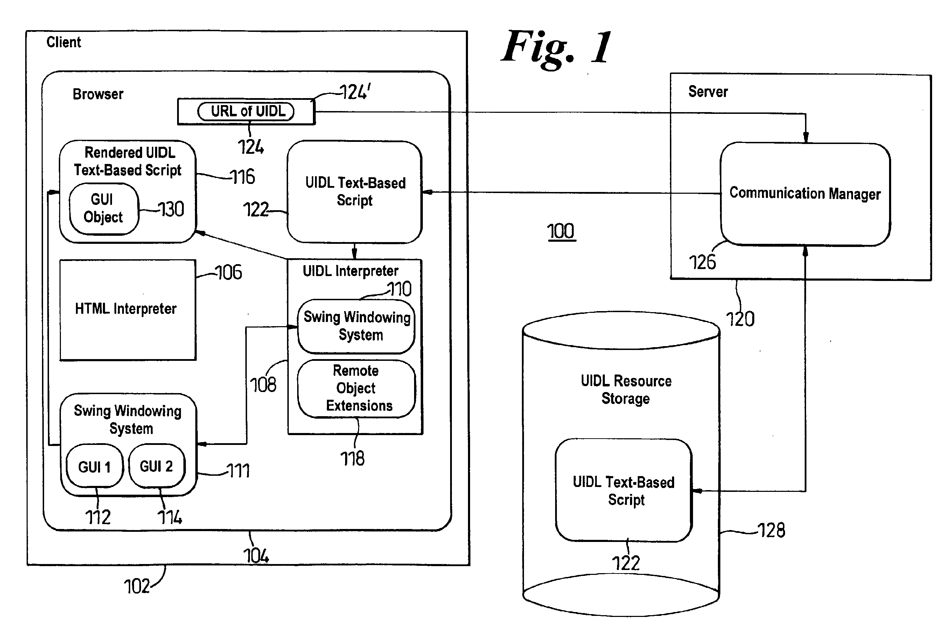

Referring to figure 1, there is shown a data processing environment 100 comprising a client machine 102. The client machine 102 contains a host environment 104. Preferably, the host environment 104 is a browser such as, for example, Internet Explorer from Microsoft. As is conventional, the browser 104 can be used to view a number of web pages (not shown) that are interpreted and rendered using an HTML interpreter 106. The browser 104 has a user interface description language interpreter 108 that comprises Swing Windowing extensions 110 to provide an interface to a Swing windowing system 111. The Swing Windowing extensions 110 are arranged to be able to invoke objects, such as GUI objects 112 and 114, to provide a graphical user interface 116, or at least elements of such an interface.

In preferred embodiments, the user interface description language interpreter 108 also provides access to remote object extensions 118. The remote object extensions 118 are arranged to invoke methods (not shown) of remote objects (not shown), that is, objects that are located on another machine, such as the illustrated server 120 or any other server (not shown). The remote object extensions 118 will be described later in this specification.

The UIDL interpreter 108 interprets a UIDL text-based script 122. The UIDL text-based script 122 is retrieved, from the server 120, via a corresponding UIDL URL 124. The server 120 is a standard HTTP web server having a communication manager 126 for implementing the HTTP.

The UIDL interpreter 108 is invoked whenever a URL corresponding to a UIDL resource is entered into an address field 124' of the browser 104. The interpreter 108 interprets the UIDL script 122 and renders GUI objects whenever they are encountered.

When the text-based script 122 has been interpreted, the UIDL interpreter monitors inputs, using an event handler (not shown but described later), generated by input devices (not shown) such as, for example, a keyboard or mouse, to determine whether or not a user is attempting to invoke a rendered GUI object 130 presented by the rendered UIDL text-based script 116. It will be appreciated that the whole of a GUI object may not be rendered, that is, the GUI object 130 may represent, in any given state, only a portion of the whole of the underlying GUI object.

Upon detection of an input generated by a corresponding input device, the UIDL interpreter 108 invokes, via the Swing Windowing extensions 110, the appropriate GUI object of the GUI objects 112 to 114 of the Swing Windowing system 111 to produce a corresponding change of state in the rendered GUI object 130. The nature of the change is defined in the UIDL text-based script 122.

The UIDL interpreter 108 comprises, in preferred embodiments, an ECMA Script compliant interpreter together with the Swing windowing extensions 110 and, preferably, the remote object extensions 118.

In current HTML browser implementations, two JavaScript libraries are provided that interact with the browser's HTML document object model DOM (DOM); namely, core JavaScript and browser JavaScript. Within embodiments of the present invention, the same paradigm exists but for the fact that the ability of HTML browser implementations to interact with the DOM is replaced with the ability to interact with the underlying windowing system 111, and, in preferred embodiments, remote object extensions 118.

The UIDL interpreter 108 is arranged to be able to access Java Swing libraries using Java Script. For example, the "LiveConnect" capability provided by Netscape provides a well-defined way of accessing Java from JavaScript. Additionally, Swing provides a cross-platform, scaleable windowing system that has a consistent look and feel as compared to a host windowing system (not shown). Therefore, access is provided to the underlying Swing Windowing system, in an embodiment, as follows:
Swing = Packages.javax.swing;

As discussed above, an event handler (not shown) is used to trap and interpret signals generated by various input devices (not shown). Suitably, the beginning of the UIDL script 122 also comprises the following alias declarations for the various packages that will be used within the script:
Event = Java.awt.event;
Awt = Java.awt;
Lang = Java.lang;

The above declarations allow GUI objects to be defined and invoked. For example, to provide a button for actuation by the user using a mouse and pointer, the following object declaration can be provided within the UIDL text-based script 122:
var button = new Packages.javax.swing.JButton();

It can be appreciated that while the above example uses the fully qualified package name, embodiments are not limited thereto. Embodiments can be realised in which an alias can be declared, which removes the need to use the fully qualified package name. For example, the button may be defined using
JButton = Swing.JButton;
in conjunction with
var button = new JButton().

An example of the use of embodiments of the present invention will now be described with reference to a currency converter.

The UIDL text-based script file 122 consists of a series of EcmaScript compatible commands, which will, firstly, instruct the browser 104, via the interpreter 108, on how the initial user interface should be rendered and, secondly, define the behaviour of user interface in response to events. An example of a UIDL text-based script file 122 is given in Appendix A. The constituent parts of that script will now be discussed.

### Package Definitions

The beginning of the UIDL script 122 consists of a number of alias declarations for the different packages used in the script. The alias declarations in effect import or make available various packages and libraries to allow the script commands to access the Swing windowing system 111 using Netscape's "LiveConnect" extensions. The initial alias declarations are shown in table 1 below.

**Table 1**

| |
|---|
| Swing= Packages.javax.swing; |
| Event= java.awt.event; |
| Awt = java.awt; |
| Lang = java.lang; |
| System = lang.system; |
| JFrame = swing.JFrame; |
| JButton = swing.JButton; |

The "Swing = Packages.javax.swing;" declaration defines a convenient alias for the Swing windowing extensions. In a similar way, the alias declaration "Event= java.awt. event;" defines an alias for the event handling capabilities of the Java Abstract Window Toolkit. The other aliases, Awt, Lang, system, etc, provide aliases for the Java packages java.awt, java.lang, java.system.

The UIDL script 122 then comprises a number of global objects that are used by the script. The global objects, in the illustrated example, are
var labelprefix = "Amount in Italian Lire: ";
var Convertcurrency =
getRemoteObject("www.test.com/objects/currencyConversion");

It will be appreciated that the first object is a string object andthat the second object is a remote object returned by a get remote object function, which forms part of the remote object extensions 118. Further detail on the operation of the remote object extensions 118 and the get remote object function will be described hereafter.

Continuing with the description of the sample script 122, two event handler functions or methods are defined. These methods will be invoked in response to corresponding user interface events. The first event, buttonAction (evt), is defined as

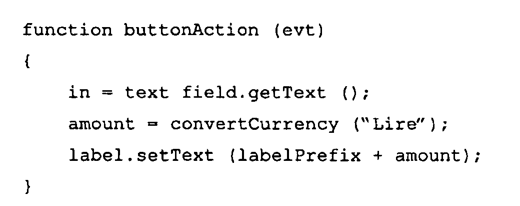

There then follows two user interface construction functions; namely createComponents() and creatMenuBar(). These functions are used to create the interface components and to place them on a content pane. The first user interface construction function, createComponents (), is shown below in table 2.

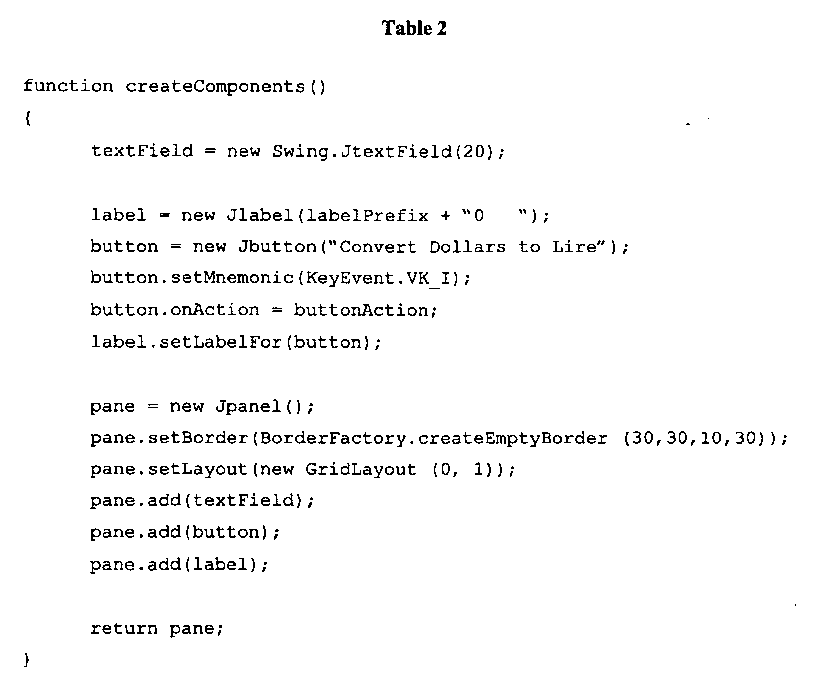

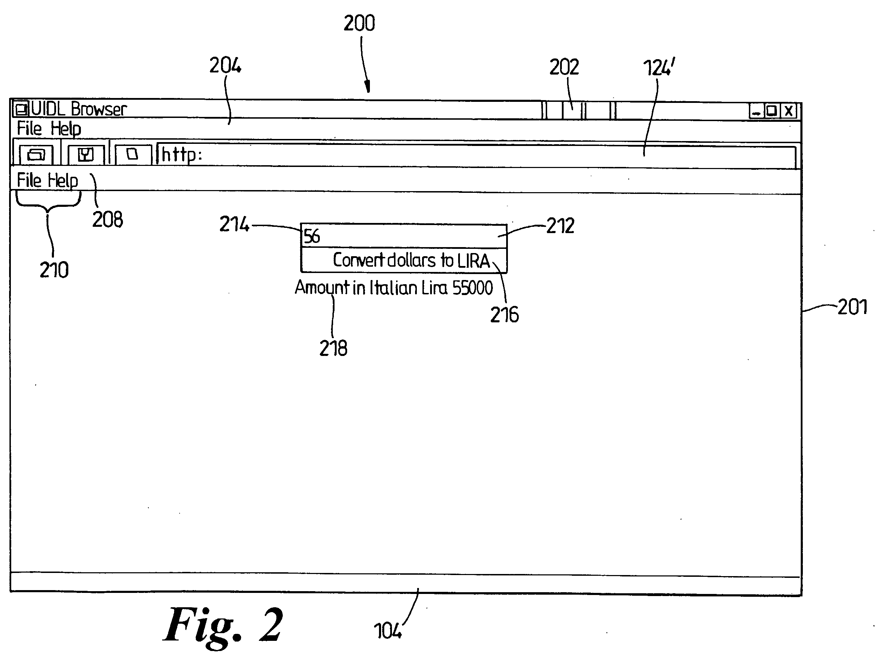

This function creates a pane 201, within the browser, that is illustrated in figure 2.

Referring to figure 2, the pane 201 is rendered within the browser 104. It can be appreciated that the browser 104 has a title bar 202 and a menu bar 204 as is conventional. There is also shown the address field 124' in which the "URL" of a UIDL script file 122 can be typed. Loading and executing the UIDL script file 112 shown in Appendix A produces the pane 201. The pane 201 also has a menu bar 208 with various pull down menu options 210. The pane 201 has a text-input field 212 for receiving a number 214, expressed in Dollars, to be converted to Lira. A *"Convert Dollars to Lira*" button 216 is provided, which, when invoked, converts the number 214, that is, 56, in the present example, to Lira. The result of the conversion, following actuation of the "*Convert Dollars to Lira*" button 216, is displayed via a text field 218. In can be appreciated that the result is shown as *"Amount in Italian Lira:56000*".

The function createMenuBar () is shown below in table 3.

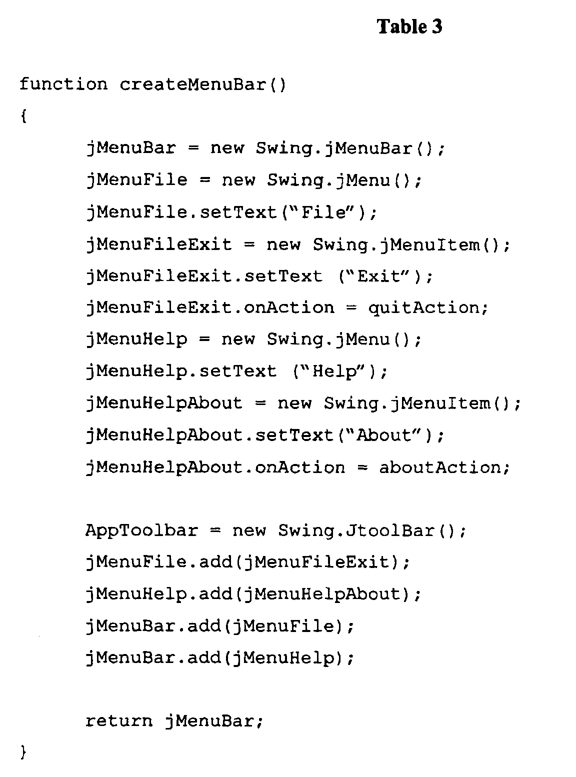

The createMenuBar event creates the menu bar 208, which also has the pull down menu items 210.

The first function, createComponents (), creates the text field 212, the button 216 and the label components and places them within their own pane (not visible here) using a grid layout manager. The second function creates and returns the menu bar 208 to be used for the application.

The end of the script sets the look and feel and makes use of the two previously defined functions; namely, createComponents and createMenuBar, which, respectively, provide the components and menu bar for the application. These are then added to the applicationFrame object, which is the base GUI component provided by the windowing extensions 110. Only components added to this frame will be visible in the application. The following script is used to implement the above
UIManager.setLookandFeel(UIManager.getCrossPlatformLookAndFeelClassName());
Content = createComponents();
applicationFrame.getContentPane().setLayout (new Awt.FlowLayout());
applicationFrame.getContentPane().add(contents);
menuBar = createMenuBar();
applicationFrame.setJMenuBar (menubar);

### Remote Obiect Invocation

It will be appreciated that, in the above example, use is made of a remote currency conversion object. Unlike current web applications, the services of objects that are invoked by an application do not necessarily need to be located on the same server from which the UIDL text-based script 122 originated. In preferred embodiments, the UIDL interpreter 108 supports
getRemoteObject(URL); and
newRemoteObject(URL);
functions.

The first function, getRemoteObj ect, is used to create a Java script proxy object for a stateless, pre-instantiated object or service and represents an embodiment of an object creator. The proxy object is used to access objects having methods that are shared between clients and that do not have a state. Examples of such objects are currency conversion web services, credit card validation web services, etc.

The second function, newRemoteObject, is used to instantiate a new, stateful, object. The object is created at the server specified in the URL and also has a type specified by the URL. Once a new object has been instantiated, it will be accessible uniquely by the client, that is, the UIDL interpreter 108.

Stateful remote objects will be used typically for maintaining application sessions. For example, a UIDL based Internet banking application might create a banking session object on an Internet banking server. This session object may contain a user's bank account details, transaction history, etc. Any operations performed by the user in relation to their account would update a corresponding banking session. However, this information would not be made available to other Internet banking users who would have their own banking session objects.

Stateless objects perform specific functions for multiple clients. The specific functions may include, for example, currency conversion, credit card validation, complex calculations etc. They do not maintain state information and, therefore, no historic information is kept between sequential requests received from a specific client. Nor is it possible for a stateless object to identify an individual client as all requests are anonymous and atomic.

Stateful objects are created on demand during the interpretation of a UIDL script, whenever a newRemoteObject (URL) method call is encountered. Upon creation, the server passes a unique identifier to the client to enable the client to identify the newly created object uniquely. In preferred embodiments, the state information of stateful objects, while it is possible to store state information in local EcmaScript variables within the UIDL interpreter 108, is stored at the server, which is more stable and secure. The remote object extensions 118 of the UIDL interpreter 108 provide an underlying mechanism via which remote objects can be located and instantiated given a corresponding URL. The mechanism preferably, for both stateful and stateless objects, returns an EcmaScript proxy object for the remote object. The proxy object will have methods that match those of the remote object. For stateful remote objects, the proxy object contains an object identifier to allow it to locate the corresponding remote stateful object.

Whenever a method call is invoked on an EcmaScript proxy object, the underlying mechanism is arranged to transmit the method call to the remote object, along with any associated parameters. The EcmaScript proxy object is also capable of decoding and returning the response.

Although the above embodiments have been described with reference to the dynamic remote object protocol, embodiments are not limited thereto. Embodiments can be realised in which the Web Services Definition Language (WSDL) is used to describe the interface to the remote objects. The UIDL interpreter 108 would use the WSDL definition to generate an EcmaScript proxy object at run-time. In such an embodiment, method calls invoked on the proxy object would be converted into SOAP requests, which could then be transmitted to the object running in a SOAP enabled environment. The SOAP replies would be converted into appropriate EcmaScript objects and returned to the calling script.

The UIDL text-based script 122 is in a human understandable form, that is, it is text-based and can be readily read by humans. Furthermore, it is also amenable to being edited so that the user interface presented by any given UIDL script 122 can be tailored to meet the needs of developers. Still further, the instructions of the UIDL text-based script represent procedural language instructions, that is, they are not mark-up language instructions.

Although the above embodiments have been described with reference to a Swing windowing system, embodiments of the present invention are not limited to such an arrangement. Embodiments can be realised in which some other windowing system is used such as, for example, X Windows or Motif extensions.

Advantageously, embodiments of the present invention allow rendered web-pages to be changed without having to completely refresh to the page, without having to launch an new instance of a browser or content pane and without having to retrieve an amended web-page from a server.

The reader's attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings) and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of any foregoing embodiments. The invention extends to any novel one, or any novel combination, of the features disclosed in this specification (including any accompanying claims, abstract and drawings), or to any novel one, or any novel combination, of the steps of any method or process so disclosed.

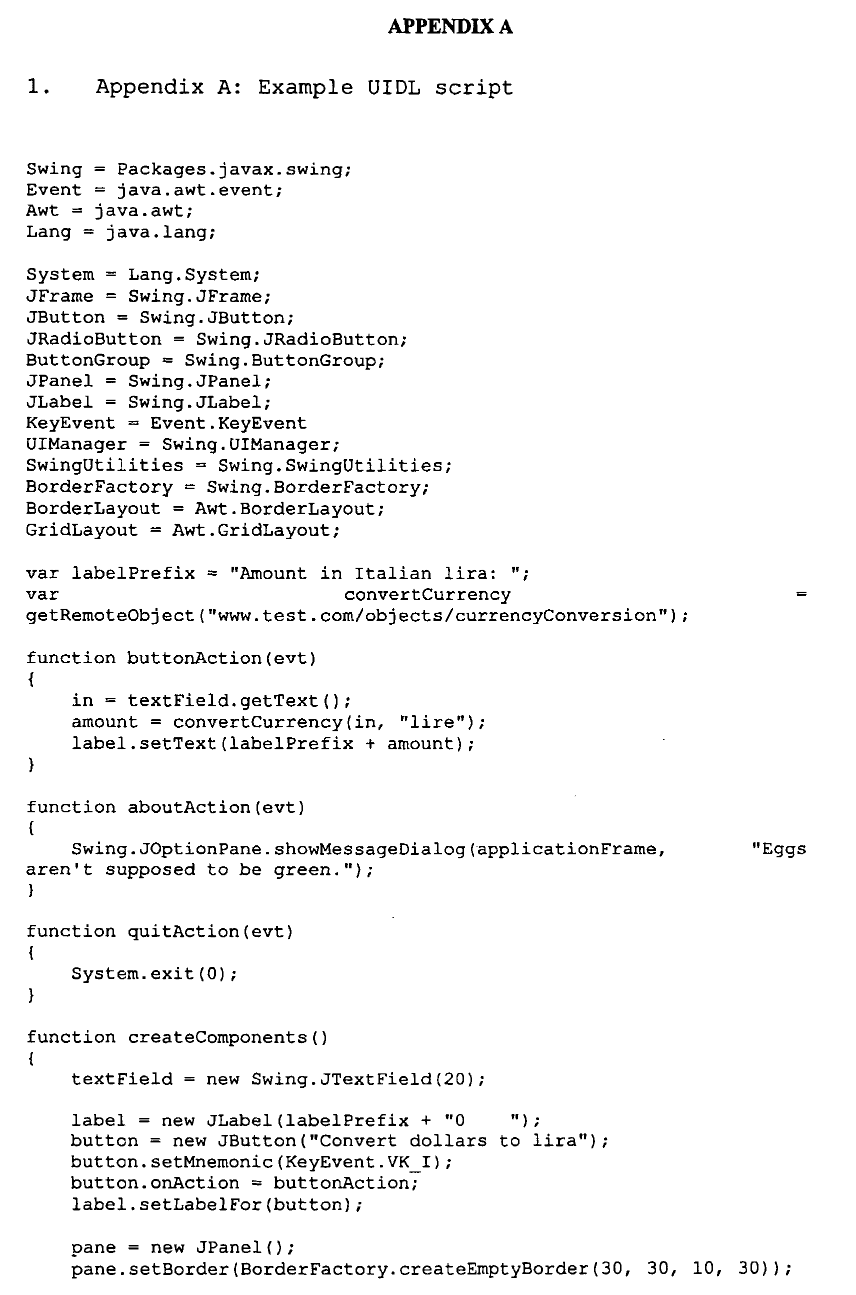

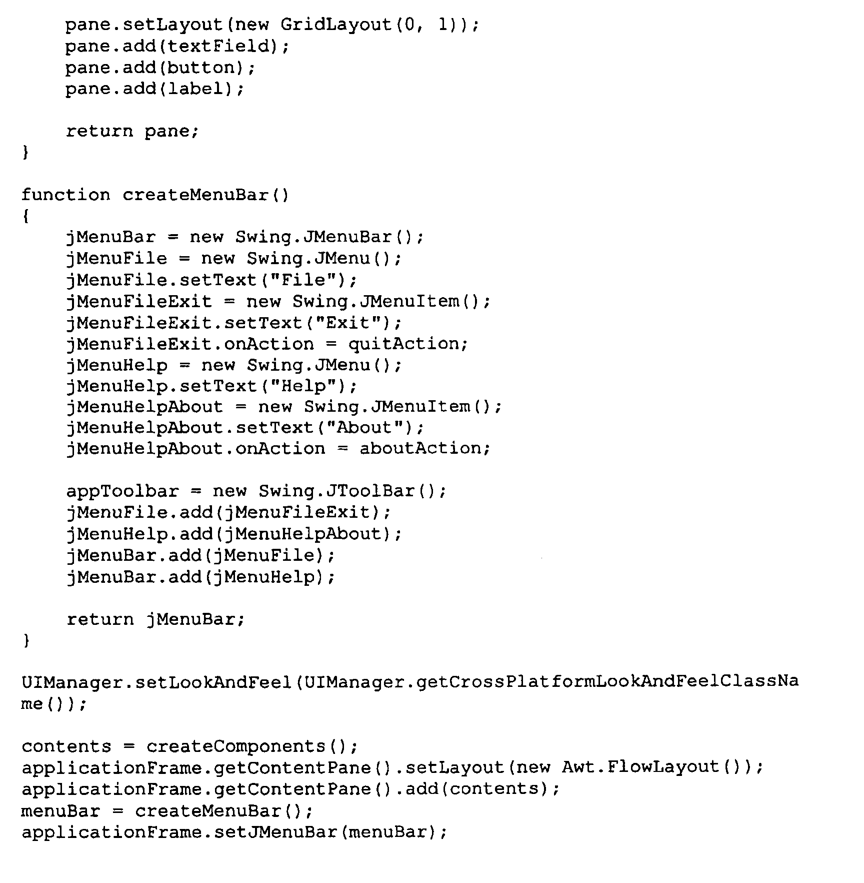

## Claims

1. A data processing system comprising a display device; a graphical user interface system comprising a graphical user interface element having properties responsive to respective events to change the state of the graphical user interface element and for presenting the graphical user interface element, according to a current state, on the display device; an event handler for directing events to the graphical user interface element; an interpretative host environment for rendering a document comprising text-based program code having at least a first text-based user interface instruction associated with the graphical user interface element; the host environment comprising an interpreter for executing the user interface instruction by invoking a corresponding first property of the properties of the graphical user interface element, in response to a first event directed to the graphical user interface element, to change the state of the graphical user interface element from the current state to first state.

2. A data processing system as claimed in claim 1, in which the event handler comprises means to direct a second event to the graphical user interface element to produce a change in state of the graphical user interface element from the current state to a second state by invoking a corresponding second property of the properties.

3. A data processing system as claimed in either of claims 1 and 2, in which the graphical user interface system is a Java based windowing system.

4. A data processing system as claimed in claim 3, in which the Java based windowing system is a Swing windowing system.

5. A data processing system as claimed in any preceding further comprising a remote method invocation system to invoke a method of a remote object stored on a remote server; the remote method invocation system comprising an object creator to create a proxy object for the remote object which can be invoked in response to the interpreter executing a third, text-based, instruction of the text-based program code.

6. A method of providing a user interface; the method comprising the steps of providing an interpreter, for interpreting a first, text-based, user interface element instruction, and a windowing system comprising at least one graphical user interface element bearing a method corresponding to the first, text-based, user interface element instruction, providing an interface between the interpreter and the windowing system, rendering at least a portion of the graphical user interface element including invoking, via the interface, the method corresponding to the first, text-based, user interface element instruction to produce on a display a rendered user interface element in response to interpretation, by the interpreter, of the first, text-based, user interface element instruction.

7. A method as claimed in claim 6, further comprising the step of providing an event handler for processing events associated with the rendered user interface element to invoke at least a second method of the at least one graphical user interface element corresponding to the first, text-based, user interface element instruction.

8. A method as claimed in either of claims 6 and 7 in which the interpreter is a script interpreter.

9. A method as claimed in claim 8 in which the script interpreter is an ECMA script interpreter.

10. A method as claimed in any of claims 6 to 9 further comprising the step of providing the interpreter with a remote method invocation mechanism via which the rendered user interface element can invoke method of an object accessible from an object server.

11. A computer program for implementing a system or method as claimed in any preceding claim.

12. A computer program product comprising a computer readable storage storing a computer program as claimed in claim 11.
